# EUROPEAN PATENT SPECIFICATION

(11) **EP 0 374 863 B1**
(45) Date of publication and mention of the grant of the patent: **28.09.1994**
(21) Application number: 89123510.3
(22) Date of filing: 20.12.1989
(51) Int. Cl.: F22B 1/28, A47J 27/04, F24C 15/00

(54) **Steam generator for cooking oven in particular of household type**
Dampferzeuger für Kochöfen, insbesondere für den Haushalt
Générateur de vapeur pour four de cuisson en particulier de ménage

(30) Priority: 21.12.1988 IT 2305088
(43) Date of publication of application: 27.06.1990
(73) Proprietor: MERLONI ELETTRODOMESTICI S.p.A., I-60044 Fabriano (AN) (IT)
(72) Inventor: Pesarini, Andrea, I-60100 Ancona (IT)
(74) Representative: Dini, Roberto, Dr. Ing.

(56) References cited:
- EP-A- 0 165 187
- FR-A- 2 398 433
- GB-A- 617 469
- US-A- 2 140 516
- US-A- 2 280 894
- US-A- 2 308 765

## Description

The subject of the present invention is a steam generator for a cooking oven, in particular of the household type.

As known, in order to obtain steam cooking, in a number of ovens there is provided a steam generator which delivers steam in the internal cooking chamber of the oven.

A steam generator to be used in connection with cooking apparatuses is known for example by US-A-2 140 516. This steam generator, however, is not suitable for modern household cooking ovens, in particular of the built-in type, which require small dimensions.

Steam generators for household ovens may be divided in overheated and atmospheric pressure steam generators.

Among atmospheric pressure steam generators, there are known steam generators comprising a boiler formed by a body wherein there is defined a vaporizing chamber, which is fed with water coming from a tank, located above the boiler. The tank outlet is generally connected with a small chamber, which communicates, through a pipe substantially arranged horizontally, with the vaporizing chamber, heated by means of one or more electric resistors.

Such known steam generators show some inconveniences.

One of the main inconveniences is due to the fact that, during operation, very often, some steam may reach the connection pipe towards the small chamber, causing, not to mention the noise, a bad working of the steam generator, as the steam flowing back along the connection pipe towards the small chamber notably affect the water amount which is fed to the vaporizing chamber. According to the above cited US-A-2 140 516, a valve is specifically provided for avoiding steam backflow.

Moreover, as the small chamber is only connected with the boiler body through the connection pipe feeding the boiler, there arise sealing problems about the connections of said elements, and also assembly difficulties.

The main object of the present invention is to avoid the above said inconveniences indicating a steam generator for cooking ovens which prevents the steam from flowing back along the pipe which feeds the boiler.

With this aim in view, an object of the present invention is to indicate a steam generator which can be easily manufactured and quickly assembled.

This steam generator prevents sealing problems such as those met in the known type generators.

These objects, which will be better understood in the following, are obtained by a steam generator comprising a tank feeding water to a boiler, said boiler comprising a body containing heating means, said body defining internally a vaporizing chamber whose outlet can be connected to the inside of an oven, said steam generator comprising a small chamber which is connected to the tank outlet, the tank being located above the boiler, and a conduit connecting the small chamber with the boiler, characterised in that said vaporizing chamber has an elongated shape and is arranged horizontally, that said conduit extends from the small chamber to the boiler along a path arranged substantially below the vaporizing chamber such that the backflow of steam from the vaporizing chamber is prevented, whereby the steam generator supplies steam to a household cooking oven.

Further characteristics of the invention will be clear from the description of a preferred embodiment of the steam generator according to the invention, which is shown as a example in the attached drawings, wherein:

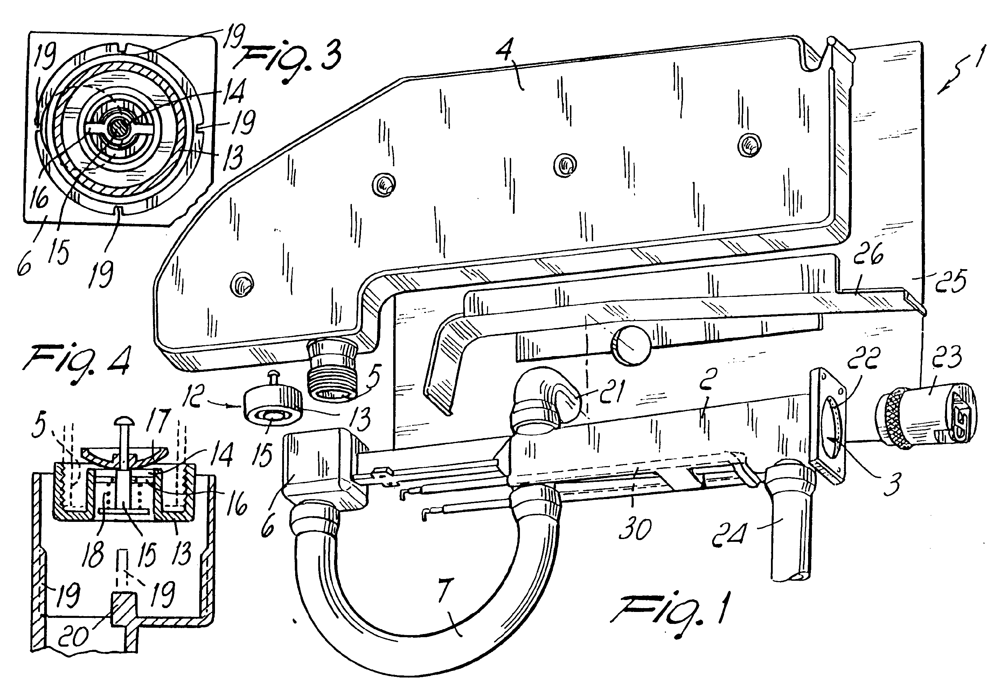

figure 1 shows an exploded perspective view of the steam generator according to the invention;
figure 2 shows the steam generator according to the invention partly sectioned along a vertical plane;
figure 3 shows an enlarged section along axis III-III of a part of figure 2;

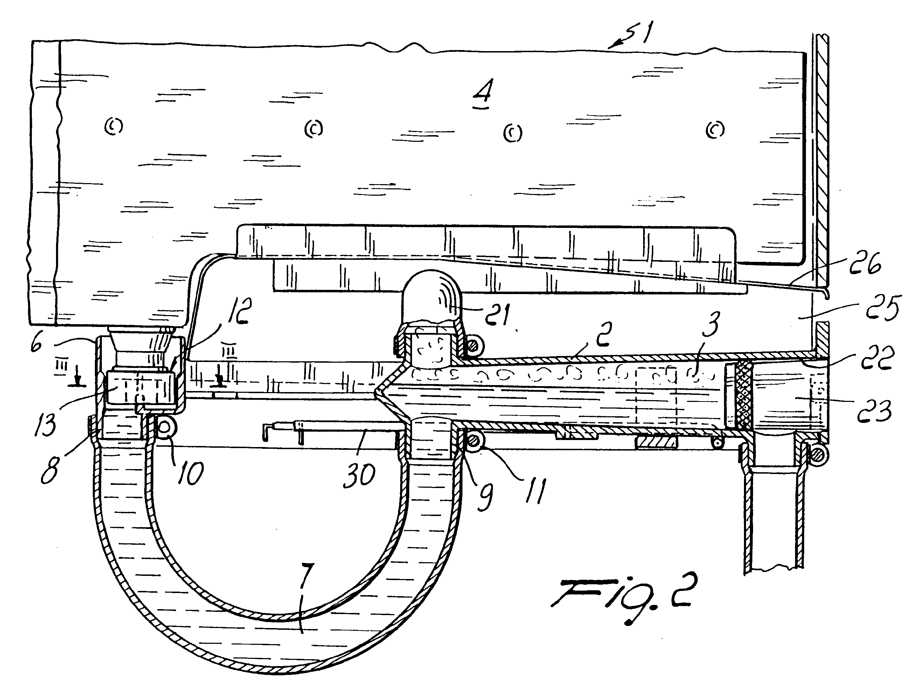

figure 4 shows an enlarged section along a vertical plane of the tank outlet as coupled to the small chamber;

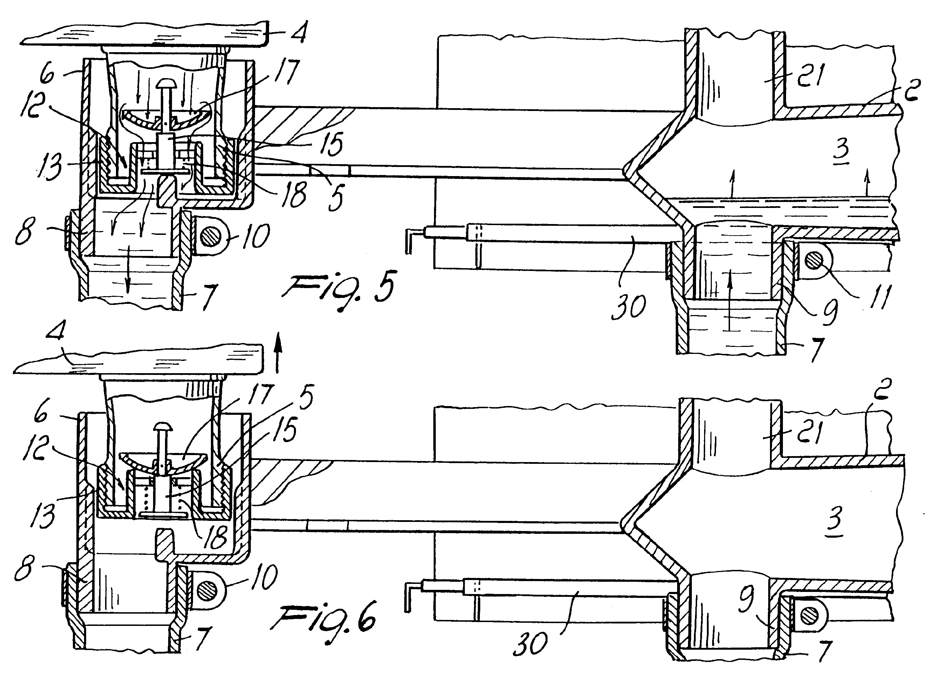

figures 5 and 6 show an enlarged portion of the steam generator according to the invention sectioned along a vertical plane, during the start of operation and during the detachment of the tank outlet from the small chamber.

Referring to the cited figures, the steam generator according to the invention, indicated as a whole with reference numeral 1, comprises a boiler 2 with a body showing heating means, as, for instance, an electrical resistance 30, and defining internally a vaporizing chamber 3 of elongated shape, arranged horizontally. The steam generator comprises also a tank 4, located above boiler 2 and provided, near the bottom, with an outlet 5, which is inserted into a small chamber 6.

Between small chamber 6 and boiler 2 there are provided hydraulic connection means 7 which, according to the invention, spread along a path which is located below the level which the water in the vaporizing chamber reaches during the steam generator operation.

More particularly hydraulic connection means 7 consist of a tubular body spreading from the bottom of small chamber 6 and ending at the bottom of vaporizing chamber 3. The tubular body may be made of a flexible material and fitted at its ends onto sockets 8 and 9 protruding from the bottom of the small chamber and of the boiler. To fasten the tubular body to sockets 8 and 9 known hose clamps 10 and 11 may be used.

At the outlet of tank 4 there is arranged a valve element 12 which allows the gradual emptying of the tank by means of air gurgling through the outlet itself.

More particularly, the valve element 12 comprises a plug 13, screwed onto the tank outlet and pierced in the center by a hole 14. In correspondence with the axis of the hole 14 there is arranged a closing device 15, slidingly held by spokes 16 along hole 14 axis. Closing device 15 shows a sealing cap 17, which internally closes hole 14 thanks to a spring 18 pushing the device 15 towards outside.

Small chamber 6 defines internally a substantially cylindrical seating wherein outlet of tank 4 is inserted and which shows radial ribs 19 in order to center plug 13 during insertion. On the bottom of small chamber 6 there is provided an above protruding stud 20 which contacts the closing device 15, so causing the opening of the valve element against the action of spring 18.

Valve element 12 is held above small chamber 6 bottom so as to allow air passage through valve element 12 in open condition.

Advantageously, tank outlet inside small chamber 6 and valve element 12 are arranged at a level in respect of the vaporizing chamber bottom substantially equal to 3/4 of the height of the vaporizing chamber 3. Advantageously, small chamber 6 is realized enbloc with the boiler body so that adequate sturdiness is obtained and, in a simple way, also correct arrangement of all steam generator components.

Small chamber and boiler body may be obtained through enbloc casting or assembled together through welding or other means of stiff connection.

Tubular body 7 outlet is defined near a longitudinal end of the boiler and, above said outlet, there is defined the inlet of a output pipe 21, leading the steam to the oven cooking chamber, wich is not shown for the sake of simplicity.

Near to other longitudinal end of vaporizing chamber, there is defined an axial opening 22, closed by a removable plug 23, in order to allow an easy periodical cleaning of the chamber 3.

Removable plug 23 also closes a drain channel 24 for disposing of the remaining water before cleaning.

The steam generator may be fastened to a supporting plate 25, coupled to a lateral wall of the oven and provided with an overhang 26, shaped in order to hold tank 4.

The operation of the steam generator according to the invention is as follows.

When the outlet of tank 4 is inserted into small chamber 6, valve element 12 is forced to open and consequently water is fed to vaporizing chamber 3 through tubular body 7. During the steam generation, the level of water in vaporizing chamber 3 is substantially held, as said, at about 3/4 of the height of vaporizing chamber 3, thanks to the arrangement of valve element 12 in small chamber 6.

AS soon as water contained in tank 4 is finished, it is possible to remove tank 4 from small chamber 6 and proceed in a simple way to refill it, removing valve element 12 from tank outlet.

Valve element 12 prevents water leakage during its insertion in small chamber 6.

It has been practically ascertained that the steam generator according to te invention fulfils very well the assigned task because it shows adequate protection against a back flowing of the steam along the pipe which feeds the water to the boiler.

Moreover, thanks to the fact that the boiler and the small chamber are made enbloc, a simpler construction and a correct generator components arrangement is obtained, also avoiding hydraulic sealing problems.

The used materials, and the sizes, may be changed according to the needs and the state of the art.

## Claims

1. Steam generator comprising a tank (4) feeding water to a boiler (2), said boiler comprising a body containing heating means, said body defining internally a vaporizing chamber (3) whose outlet can be connected to the inside of an oven, said steam generator comprising a small chamber (6) which is connected to the tank outlet, the tank being located above the boiler, and a conduit (7) connecting the small chamber (6) with the boiler (2), characterised in that said vaporizing chamber (3) has an elongated shape and is arranged horizontally, that said conduit (7) extends from the small chamber (6) to the boiler (2) along a path arranged substantially below the vaporizing chamber (3) such that the backflow of steam from the vaporizing chamber is prevented, whereby the steam generator supplies steam to a household cooking oven.

2. Steam generator according to claim 1, characterised in that said conduit (7) is a tubular body one end of which is connected to the bottom of said vaporizing chamber (3).

3. Steam generator according to claim 1 or 2, characterised in that the outlet (5) of said tank (4) is provided with a valve element (12) for the emptying by means of air gurgling through said valve element, and that said valve element (12) is located at a level, with respect to the vaporizing chamber bottom, substantially equal to 3/4 of the height of said vaporizing chamber (6).

4. Steam generator according to one or more of the preceding claims, characterised in that said small chamber (6) is made enbloc with the body of said boiler (2).

5. Steam generator according to one or more of the preceding claims, characterised in that said valve element (12) comprises a closing device (15) which may contact a stud (20) protruding from the bottom of said small chamber (6) in order to open said valve element (12).

6. Steam generator according to one or more of the preceding claims, characterised in that the outlet of said conduit (7) is defined near a longitudinal end of said vaporizing chamber (3).

7. Steam generator according to one or more of the preceding claims, characterised in that, above the outlet of said conduit (7), there is defined the inlet of an output pipe (21 ) leading the steam to the cooking chamber of said oven.

8. Steam generator according to one or more of the preceding claims, characterised in that, inside said boiler (2), there is defined an axial access opening (22) closed by a removable plug (23), for the cleaning of said vaporizing chamber (3).

9. Household cooking oven, comprising a steam generator according to one or more of the preceding claims.

## Patentansprüche

1. Dampferzeuger, bestehend aus einem Tank (4), der einen Boiler (2) mit Wasser versorgt, welcher Boiler einen Körper mit Heizeinrichtungen aufweist, welcher Körper im Inneren eine Verdampfungskammer (3) aufweist, deren Abzug an das Innere eines Ofens angeschlossen werden kann, welcher Dampferzeuger eine kleine Kammer (6) aufweist, die an den Tankabfluß angeschlossen ist, wobei der Tank oberhalb des Boilers angeordnet ist, und einer Leitung (7), die die kleine Kammer (6) mit dem Boiler (2) verbindet, dadurch gekennzeichnet, daß die Verdampfungskammer (3) eine längliche Form aufweist und horizontal angeordnet ist, daß die Leitung (7) sich von der kleinen Kammer (6) zum Boiler (2) entlang eines Weges, der sich im wesentlichen unterhalb der Verdampfungskammer (3) befindet, erstreckt, derart, daß der Rückstrom des Dampfes aus der Verdampfungskammer verhindert wird, wodurch der Dampferzeuger Dampf an einen Kochofen für den Haushalt liefert.

2. Dampferzeuger nach Anspruch 1, dadurch gekennzeichnet, daß die Leitung (7) ein röhrenförmiger Körper ist, dessen eines Ende an den Boden der Verdampfungskammer (3) angeschlossen ist.

3. Dampferzeuger nach Anspruch 1 oder 2, dadurch gekennzeichnet, daß der Abfluß (5) des Tanks (4) ein Ventilelement (12) zur Entleerung mlttels eines Luftstroms durch das Ventilelement aufweist, und daß das Ventilelement (12) in einer Höhe, bezogen auf den Verdampfungskammerboden, im wesentlichen gleich 3/4 der Höhe der Verdampfungskammer (3) angeordnet ist.

4. Dampferzeuger nach einem oder mehreren der vorhergehenden Ansprüche, dadurch gekennzeichnet, daß die kleine Kammer (6) en bloc mit dem Körper des Boilers (2) gebildet ist.

5. Dampferzeuger nach einem oder mehreren der vorhergehenden Ansprüche, dadurch gekennzeichnet, daß das Ventilelement (12) eine Schließvorrichtung (15) aufweist, die in ein aus dem Boden der kleinen Kammer (6) hervorstehendes Kontaktstück (20) eingreifen kann, um das Ventilelement (12) zu öffnen.

6. Dampferzeuger nach einem oder mehreren der vorhergehenden Ansprüche, dadurch gekennzeichnet, daß der Auslaß der Leitung (7) sich neben einem längs verlaufenden Ende der Dampfkammer (3) befindet.

7. Dampferzeuger nach einem oder mehreren der vorhergehenden Ansprüche, dadurch gekennzeichnet, daß sich oberhalb des Auslasses der Leitung (7) der Einlaß eines Austrittrohrs (21) befindet, das den Dampf zur Kochkammer des Ofens leitet.

8. Dampferzeuger nach einem oder mehreren der vorhergehenden Ansprüche, dadurch gekennzeichnet, daß innerhalb des Boilers (2) eine axiale Zutrittsöffnung (22) vorgesehen ist, die durch einen abnehmbaren Verschluß (23) zur Reinigung der Dampfkammer (3) verschließbar ist.

9. Kochofen für den Haushalt bestehend aus einem Dampferzeuger gemäß einem oder mehreren der vorhergehenden Ansprüche.

## Revendications

1. Générateur de vapeur d'eau comprenant un réservoir (4) transmettant de l'eau à une chaudière (2), la chaudière ayant un corps qui contient un dispositif de chauffage, le corps délimitant à l'intérieur une chambre de vaporisation (3) dont la sortie peut être raccordée à l'intérieur d'un four, le générateur de vapeur comprenant une petite chambre (6) qui est raccordée à la sortie du réservoir, le réservoir étant placé au-dessus de la chaudière, et un conduit (7) raccordant la petite chambre (6) à la chaudiére (2), caractérisé en ce que la chambre de vaporisation (3) a une forme allongée et est placée horizontalement, en ce que le conduit (7) est disposé de la petite chambre (6) à la chaudière (2) le long d'un trajet placé pratiquement au-dessous de la chambre de vaporisation (3) si bien que l'écoulement de la vapeur en sens inverse depuis la chambre de vaporisation est empêché, et le générateur de vapeur transmet ainsi de la vapeur d'eau à un four domestique de cuisson.

2. Générateur de vapeur selon la revendication 1, caractérisé en ce que le conduit (7) est un corps tubulaire dont une première extrémité est raccordée au fond de la chambre de vaporisation (3).

3. Générateur de vapeur selon la revendication 1 ou 2, caractérisé en ce la sortie (5) du réservoir (4) comporte un élément d'obturation (12) destiné à la vidange par gargouillement d'air par l'élément d'obturation, et en ce que l'élément d'obturation (12) est disposé, par rapport au fond de la chambre de vaporisation, à un niveau correspondant pratiquement aux trois quarts de la hauteur de la chambre de vaporisation (6).

4. Générateur de vapeur selon une ou plusieurs des revendications précédentes, caractérisé en ce que la petite chambre (6) est réalisée sous forme solidaire du corps de la chaudière (2).

5. Générateur de vapeur selon une ou plusieurs des revendications précédentes, caractérisé en ce que l'élément d'obturation (12) comporte un dispositif de fermeture (15) qui peut être au contact d'un plot (20) qui dépasse du fond de la petite chambre (6) afin que l'élément d'obturation (12) soit ouvert.

6. Générateur de vapeur selon une ou plusieurs des revendications précédentes, caractérisé en ce la sortie du conduit (7) est délimitée près d'une extrémité longitudinale de la chambre de vaporisation (3).

7. Générateur de vapeur selon une ou plusieurs des revendications précédentes, caractérisé en ce que l'entrée d'un tube de sortie (21) conduisant la vapeur d'eau à la chambre de cuisson du four est disposée au-dessus de la sortie du conduit (7).

8. Générateur de vapeur selon une ou plusieurs des revendications précédentes, caractérisé en ce qu'une ouverture axiale (22) d'accès, fermée par un bouchon amovible (23), est délimitée à l'intérieur de la chaudière (2) pour le nettoyage de la chambre de vaporisation (3).

9. Four domestique de cuisson, comprenant un générateur de vapeur d'eau selon une ou plusieurs des revendications précédentes.
